# EUROPÄISCHE PATENTSCHRIFT

(11) **EP 1 295 753 B1**
(45) Veröffentlichungstag und Bekanntmachung des Hinweises auf die Patenterteilung: **26.07.2006**
(21) Anmeldenummer: 02013219.7
(22) Anmeldetag: 15.06.2002
(51) Int. Cl.: B60N 2/20

(54) **Gelenkbeschlag für einen Kraftfahrzeugsitz mit vorkippbarer Rückenlehne**
Hinge fitting for an automotive vehicle seat with forward tiltable backrest
Ferrure d'articulation pour un siège d'automobile avec dossier basculable vers l'avant

(30) Priorität: 19.09.2001 DE 10146300
(43) Veröffentlichungstag der Anmeldung: 26.03.2003
(73) Patentinhaber: C. Rob. Hammerstein GmbH & Co.KG, 42699 Solingen (DE)
(72) Erfinder: Houston, Robert, 42799 Leichlingen (DE); Becker, Burckhard, 42657 Solingen (DE); Gumbrich, Markus, 42697 Solingen (DE)
(74) Vertreter: Bauer, Wulf

(56) Entgegenhaltungen:
- EP-A- 1 034 972
- DE-A- 2 829 701
- DE-A- 4 439 644
- US-A- 4 269 446
- US-A- 6 030 042

## Beschreibung

Die Erfindung bezieht sich auf einen Gelenkbeschlag, der für einen Kraftfahrzeugsitz mit vorkippbarer Rückenlehne bestimmt ist und der ein erstes Beschlagteil, ein zweites Beschlagteil und ein Schwenkgelenk aufweist, über das diese beiden Beschlagteile um ein Gelenkochse schwenkbar miteinander verbunden sind.

Insbesondere bei Kraftfahrzeugen mit nur zwei Seitentüren ist es üblich, dass die Vordersitze eine vorkippbare Rückenlehne haben, damit der Einstieg zu hinteren Sitze erleichtert wird. Aus dem Stand der Technik, siehe z.B. DE 28 29 701 A; US 4,269,446; US 6,030,042, ist ein Gelenkbeschlag der eingangs genannten Art bekannt, bei dem an einem Beschlagteil ein Haken angelenkt ist, der mit einem Bolzen am anderen Gelenkteil zusammen wirkt. Nach Lösen des Hakens vom Bolzen können die Beschlagteile gegeneinander um die Gelenkachse verschwenkt werden. Damit kann die Rükkenlehne nach vorn gekippt werden. Beim Zurückkippen wird die Bewegung durch einen mechanischen Anschlag begrenzt, der sich zwischen dem ersten und dem zweiten Beschlagteil befindet. Ist dieser Anschlag erreicht, wird die entsprechende Winkelposition nun zwischen den beiden Beschlagteilen durch Einhaken des Hakens um den Bolzen gesichert.

Zusätzlich haben derartige Kraftfahrzeugsitze auch noch einen Beschlag, der eine Neigungsverstellung der Rückenlehne gegenüber dem Sitzträger ermöglicht. Die Verstellung dieses Beschlages ist aber relativ zeitaufwendig. Mit dem Gelenkbeschlag der eingangs genannten Art wird eine rasche Verstellung um einen größeren Winkelbereich, beispielsweise 90°, erreicht.

Der vorbekannte Gelenkbeschlag ist dadurch spielfrei, dass der Haken mit dem Bolzen entlang einer Hakenfläche in Kontakt kommt, die mit zunehmendem Einschwenken des Hakens um den Bolzen den Bolzen immer stärker zur Schwenkachse des Hakens zieht.

Der Haken befindet sich normalerweise in seiner Sperrstellung. Dem Haken ist ein elastisches Mittel zugeordnet, das ihn in der Sperrstellung vorbelastet. Es ist ein Zugmittel vorgesehen, das am Haken angreift und es ermöglicht, den Haken aus seiner Sperrstellung und gegen die Wirkung des elastischen Mittels herauszuschwenken. Das Zugmittel endet in einem Handgriff, der sich üblicherweise im oberen Bereich der Rückenlehne, an der Seite der Rückenlehne, befindet. Wird dieser Handgriff betätigt, schwenkt der Haken frei und ist eine Schnellverstellung der Rückenlehne möglich.

Dieser vorbekannte Gelenkbeschlag hat sich grundsätzlich bewährt. Bei den bekannten Ausbildungen des Gelenkbeschlags sind die Wege, über welche die Abstützung erfolgt, relativ lang. Die Hebelarme sind also relativ groß.

Hier setzt nun die Erfindung ein. Sie hat es sich zur Aufgabe gemacht, eine andere Konstruktion eines Gelenkbeschlages anzugeben, bei der kurze Wege der Abstützung im Sperrzustand vorliegen, die kompakt baut und bei der die Schwenklagerung desjenigen Teils, dass die Blockierung bewirkt, nicht für einen Spielausgleich herangezogen werden muss.

Diese Aufgabe wird gelöst durch einen Gelenkbeschlag, der für einen Kraftfahrzeugsitz mit vorkippbarer Rückenlehne bestimmt ist und der ein erstes Beschlagteil, ein zweites Beschlagteil und ein Schwenkgelenk aufweist, über das diese beiden Beschlagteile schwenkbar miteinander verbunden sind, dieser Gelenkbeschlag weist weiterhin auf,
- einen Sperrnocken, der am ersten Beschlagteil um eine Nockenachse schwenkbar angelenkt ist, und der einen ersten, in Nähe der Nockenachse befindlichen Endbereich und einen diesem ersten Endbereich gegenüberliegenden, zweiten Endbereich hat,
- eine Sperrbucht, die am zweiten Beschlagteil ausgebildet ist, die eine erste Sperrflanke und eine dieser gegenüberliegende zweite Sperrflanke aufweist, wobei der Abstand dieser Sperrflanken dem Abstand der beiden Endbereiche angepasst ist und diese Sperrflanken so angeordnet sind, dass ein Kreisbogen um die Gelenkachse als Zentrum, der durch die Nockenachse verläuft, die erste Sperrflanke schneidet und außerhalb der zweiten Sperrflanke verläuft und
- eine Betätigungsvorrichtung, die am Sperrnocken im Abstand von der Nockenachse angreift, so dass der Sperrnocken aus einer Sperrstellung in eine Freigabestellung betätigt werden kann,
- wobei in der Sperrstellung der erste Endbereich des Sperrnockens an der ersten Sperrflanke und der zweite Endbereich des Sperrnockens an der zweiten Sperrflanke anliegen.

Bei diesem Gelenkbeschlag bildet der Sperrnocken zum einen den notwendigen Anschlag, der beim Rückklappen der vorgekippten Rückenlehne die Rückbewegung begrenzt. Ein separater Anschlag, wie beim Gelenkbeschlag nach dem Stand der Technik, ist damit nicht notwendig.

Zum anderen findet sich in Sperrstellung der Sperrnocken mit seinen beiden Endbereichen zwischen den beiden Sperrflanken der Sperrbucht ein. Der Sperrnocken, der eine ähnliche Funktion wie der Haken beim Gelenkbeschlag nach dem Stand der Technik hat, bewirkt nicht nur die Festlegung in einer Schwenkrichtung, sondern in beiden möglichen Schwenkrichtungen der Rückenlehne. Dadurch ist die Schwenkachse, also die Nockenachse, praktisch nicht belastet, jedenfalls werden keine Klemmkräfte über die Nokkenachse in das andere Beschlagteil eingeleitet, wie beim Stand der Technik. Die erste Sperrflanke kann sich in unmittelbarer Nähe der Nockenachse befinden, sodass die Lagerung der Sperrnockens einfach ausgebildet sein kann. Die Klemmkräfte kommen durch unmittelbaren Kontakt der beiden Endbereiche des Sperrnockens mit den dazugehörigen Sperrflanken zustande. In dieser Sperrstellung wird die Nockenachse nicht mehr benötigt. Sie wird benötigt zur Kraftübertragung und um den Sperrnocken in die Freigabestellung und von dieser zurück in die Sperrstellung zu bewegen, nicht aber für den Sperrvorgang selbst.

Der Gelenkbeschlag ist mit einfachen Mitteln spielfrei zu machen. Im Vergleich zum Gelenkbeschlag nach dem Stand der Technik werden weniger Teile benötigt. Das Blockieren erfolgt mit größerer Präzision. Dadurch ist auch die Übertragung der Gelenkposition des Gelenkbeschlags einer Sitzseite auf den Gelenkbeschlag der anderen Sitzseite vereinfacht und erfolgt genauer.

Bei einem Gelenkbeschlag nach dem Stand der Technik ist der Haken das schwenkbare Sperrmittel. Im Sperrzustand wird die Schwenkachse dieses Sperrmittels zum Sperrbereich hin gezogen. Bei dem Gelenkbeschlag nach der Erfindung, der als Sperrmittel einen Sperrnocken benutzt, ist dies genau umgekehrt. Im Sperrzustand drückt das freie Ende des Sperrnockens das Schwenkgelenk weg. Da sich in unmittelbarer Nähe des Schwenkgelenks aber eine Abstützung in Form des dortigen Endbereichs, nämlich des ersten Endbereichs, und der ersten Sperrflanke befindet, ist nicht die Schwenkachse für die Sperrposition bestimmend, vielmehr die Passform des Sperrnokkens und der Sperrbucht.

Ein Kreis um die Gelenkachse als Zentrum und durch die Nockenachse schneidet zwar die erste Sperrflanke, bleibt aber außerhalb der zweiten Sperrflanke. Dadurch bleibt der Sperrnocken außerhalb des Bewegungskreises der zweiten Sperrflanke und insgesamt der Sperrbucht, wenn die Rükkenlehne nach vorn gekippt wird. Beim Zurückkippen schlägt der erste Endbereich an die erste Sperrflanke an und bildet dadurch den beschriebenen Anschlag bei der Rückbewegung.

Wie im Stand der Technik ist eine Betätigungsvorrichtung vorgesehen. Diese wirkt aber nun auf den Sperrnocken. Der Sperrnocken befindet sich normalerweise in der Sperrstellung. Durch Betätigen der Betätigungsvorrichtung wird er aus der Sperrstellung in die Freigebestellung geschwenkt. Damit ist ein rasches Vorkippen der Rückenlehne möglich.

In einer bevorzugten Weiterbildung ist am Sperrnocken eine Drehfeder angeordnet, die diesen elastisch in einer Drehrichtung vorbelastet, die gegensätzlich ist zur Drehrichtung beim Vorklappen der Rückenlehne. Diese Drehfeder belastet daher den Sperrnocken relativ zum ersten Beschlagteil immer in die Sperrposition und hält diese aufrecht.

In einer bevorzugten Weiterbildung findet beim Zurückschwenken der nach vorn gekippten Rückenlehne der erste Kontakt zwischen dem ersten Sperrbereich und der ersten Sperrflanke in einem Punkt des ersten Endbereichs statt, der gegenüber der Nockenachse so positioniert ist, dass ein einschwenkendes Drehmoment erreicht wird. Der erste Kontakt bewirkt also, dass der zweite Endbereich zur zweite Sperrflanke hin bewegt wird.

In einer weiteren Verbesserung wird vorgeschlagen, dass die erste Sperrflanke auf einem Teilstück einer Geraden verläuft, die durch die Gelenkachse geht. Dadurch wird ein präziser Anschlag beim Zurückschwenken der Rükkenlehne erreicht.

In vorteilhafter Weiterbildung hat die Betätigungsvorrichtung ein Steuerteil, das am zweiten Beschlagteil angelenkt ist. Es ist ein Zugmittel vorgesehen, das insbesondere als Bowdenzug ausgeführt ist, und ein Verschwenken des Steuerteils aus seiner Ruhestellung in eine Freigabestellung ermöglicht. Das Steuerteil hat einen Lösearm, der beim Betätigen des Zugmittels den Steuernocken aus der Sperrstellung in die Freigabestellung rückt. Auf diese Weise wird der Sperrnocken betätigt. Zwar ist es grundsätzlich möglich, den Sperrnocken auch direkt zu betätigen, die Betätigung über das Steuerteil hat aber den Vorteil, dass das Zugmittel an einem Teil angreifen kann, das sich mit dem selben Beschlagteil bewegt wie die Handhabe des Zugmittels. Es ist also nicht notwendig, das Zugmittel so anzuordnen, dass durch die Schwenkbewegung der Rückenlehne kein Zug auf das Zugmittel ausgeübt wird.

In einer weiteren Fortbildung hat das Steuerteil eine Haltenase, die in Ruhestellung des Steuerteils hinter eine Blockierflanke des Sperrnockens greift. Auf diese Weise wird der Sperrnocken mechanisch blockiert. Er kann auch bei Beschleunigungskräften, die am Sperrnocken angreifen, nicht aus der Sperrstellung gedrückt werden.

Weitere Vorteile und Merkmale der Erfindung ergeben sich aus den übrigen Ansprüchen, sowie der nun folgenden Beschreibung eines nicht einschränken zu verstehenden Ausführungsbeispiels der Erfindung, das im Folgenden unter Bezugnahme auf die Zeichnung näher erläutert wird. In dieser Zeichnung zeigen:
Fig. 1 eine Seitenansicht der wesentlichen Teile eines Kraftfahrzeugsitzes mit vorkippbarer Rückenlehne, die Rückenlehne ist in Normalposition und verriegelt,
Fig. 2 eine Darstellung wie Fig. 1, jedoch nunmehr mit entriegeltem Gelenkbeschlag zwischen Rückenlehne und einem Sitzträger und
Fig. 3 eine Darstellung wie Fig. 2 , jedoch nunmehr mit vorgeklappter Rükkenlehne.

Aus den Figuren ist ein Kraftfahrzeugsitz zu erkennen, der mit einer vorkippbaren Rückenlehne 20 ausgestattet ist. Es hat weiterhin einen Sitzträger 22. Letzterer ist schematisch dargestellt, er wird über ein an sich bekanntes Untergestell (nicht dargestellt) mit einer Bodengruppe eines Kraftfahrzeugs (nicht dargestellt) verbunden.

Rückenlehne 20 und Sitzträger 22 sind über einen Gelenkbeschlag miteinander verbunden. Dieser hat ein erstes Beschlagteil 24, das im wesentlichen plattenförmig ausgebildet ist und in zwei Befestigungspunkten mit dem Sitzträger 22 verbunden ist, sowie ein zweites Beschlagteil 26, das zur Rükkenlehne gehört, es ist mit einem Träger (nicht dargestellt) der Rückenlehne verbunden. Diese beiden Beschlagteile 24, 26 sind mittels eines Schwenkgelenks um eine Gelenkachse 28 schwenkbar miteinander verbunden.

Am ersten Beschlagteil 24 ist ein Sperrnocken 30 schwenkbar angelenkt um eine Nockenachse 32. Er hat einen ersten Endbereich 34, der sich in unmittelbarer Nähe der Nockenachse 32 befindet und weiterhin einen dem ersten Endbereich 34 gegenüberliegenden zweiten Endbereich 36.

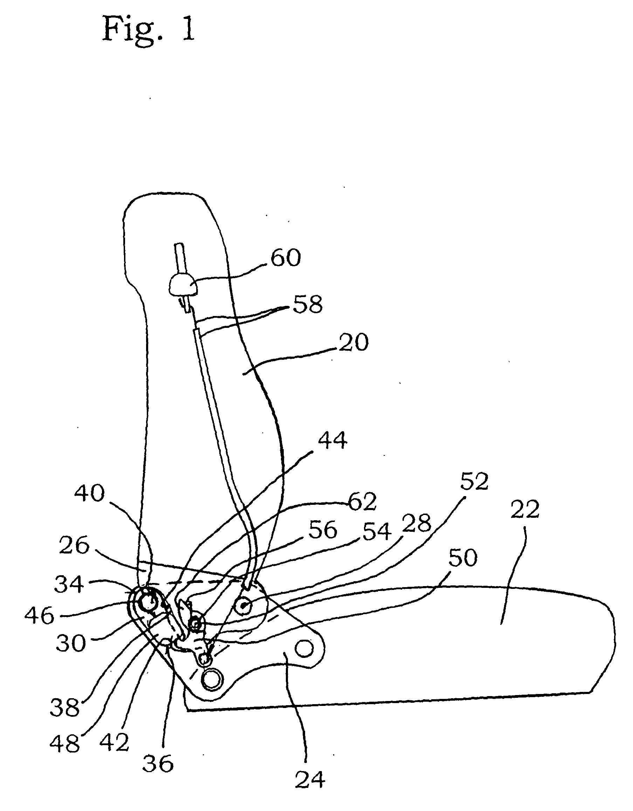

Am zweiten Beschlagteil 26 ist in der Nähe des Sperrnockens 30 eine Sperrbucht 38 ausgebildet. Diese besteht im wesentlichen aus einer ersten Sperrflanke 40, einer dieser gegenüberliegenden zweiten Sperrflanke 42 und einer diese Sperrflanken 40, 42 verbindenden Basis 44. Die Sperrbucht 38 ist formmäßig im Wesentlichen dem Sperrnocken 30 angepasst und kann diesen aufnehmen, wie insbesondere Figur 1 zeigt. Hierzu ist unter anderem der Abstand der Sperrflächen 40, 42 dem Abstand der beiden Endbereiche 34, 36 angepasst. Der zweite Endbereich 36 und die zweite Sperrflanke 42 sind formmäßig so aufeinander abgestimmt, dass mit zunehmender Schwenkbewegung des Sperrnockens 30 um seine Nockenachse 32 in die Sperrposition ein zunehmender Kontakt zwischen dem zweiten Endbereich 36 und der zweiten Sperrflanke 42 auftritt. Der Verlauf dieser beiden Begrenzungslinien, also zweiter Endbereich 36 und zweite Sperrflanke 42, ist so, dass sie einen Winkel im Bereich unterhalb der Selbsthemmung, also typischerweise 7, 10 oder 14°, je nach verwendeten Materialien, einschließen. Durch diesen Schrägverlauf werden Herstellungs- und Montageungenauigkeiten ausgeglichen.

Der Kontakt zwischen dem zweiten Endbereich 36 und der zweiten Sperrflanke 42 führt zu einer Reaktionskraft im Bereich des ersten Endbereichs 34. Dieser wird gegen die ihm zugeordnete erste Sperrflanke 40 gedrückt. Damit stützt sich der Sperrnocken 30 zwischen den beiden Sperrflanken 40, 42 ab, wenn er im Sperrzustand ist, wie dies Figur 1 zeigt.

Der Sperrnocken 30 wird in der gezeigten Sperrstellung durch eine Drehfeder 36 elastisch vorbelastet. Weiterhin wird er formschlüssig in der Sperrstellung gehalten, hierauf wird im Folgenden noch eingegangen.

In kinematischer Umkehrung ist es durchaus möglich, den Sperrnocken 30 am zweiten Beschlagteil 26 anzulenken, dann befindet sich die Sperrbucht 38 am ersten Beschlagteil 24.

In der gezeigten Ausführung befinden sich Sperrnocken 30 und Sperrbucht 38 von einer Sitzvorderkante gesehen hinter der Gelenkachse 28, sie befinden sich zudem auf etwa gleicher Höhe wie diese. Es ist möglich, die Anordnung aus Sperrnocken 30 und Sperrbucht 38 auch in einer anderen Winkelstellung zur Gelenkachse 28 als dargestellt anzuordnen sein.

Das zweite Beschlagteil 26 ist ebenfalls plattenförmig. Der Sperrnocken 30 ist vorzugsweise aus einem Blech gleicher Dicke wie das zweite Beschlagteil 26 gefertigt. In Bezug auf das erste Beschlagteil 24 befinden sich zweites Beschlagteil 26 und Sperrnocken 30 auf der selben Seite des ersten Beschlagteils 20. Auf der vom ersten Beschlagteil 24 abgewandten Hauptfläche des Sperrnockens 30 ist ein plattenförmiges Sicherheitsstück befestigt. In Einschwenkrichtung des Sperrnockens 30 in die in Figur 1 dargestellte Sperrstellung liegt es noch vor dem entsprechenden Rand des Sperrnockens 30, übergreift also den Sperrnocken 30. In der gezeigten Sperrstellung befindet sich ein dem Sperrnocken 30 unmittelbar benachbartes Teilstück des zweiten Beschlagteils 46 zwischen dem Sicherheitsstück 48 und einem entsprechendem Teilstück des ersten Beschlagteils 24. Bei starker Belastung des Sperrnockens, beispielsweise bei einem Unfall, wird verhindert, dass sich das freie Ende des Sperrnockens aus der Zeichnungsebene bewegen und damit der Sperreingriff verloren gehen kann.

Das Sicherheitsstück 48 bildet zudem eine am freien Ende des Sperrnockens 30 vorspringende Blockierflanke 50 aus, auf diese wird noch später eingegangen.

In unmittelbarer Nähe des Sperrnockens 30 befindet sich ein Steuerteil 50 einer Betätigungsvorrichtung. Es ist an dem anderen Beschlagteil, nämlich am zweiten Beschlagteil 26, angeordnet als der Sperrnocken 30. Es ist um eine Steuerteilachse 52 schwenkbar am zweiten Beschlagteil 26 angebracht. Durch eine Schwenkfeder 54 wird es elastisch so vorbelastet, dass es gegen einen Anschlag 56 gedrückt wird.

Das Steuerteil 50 ist im Wesentlichen dreiarmig. Die drei Arme stehen im wesentlichen T-förmig zu einander. Ein erster, nach unten weisender Arm ist mit einem Zugmittel, das hier als Bowdenzug 58 aufgeführt ist, verbunden. Es endet im oberen Bereich der Rückenlehne 20, seitlich, in einer Handhabe 60, die beispielsweise als Wippe oder als Schwenkhebel ausgeführt ist. Sie ist so ausgelegt, dass Zug auf die Seele des Bowdenzugs ausgeübt werden kann. Unter der Wirkung der Schwenkfeder befindet sich die Handhabe 60 normalerweise in Ruheposition.

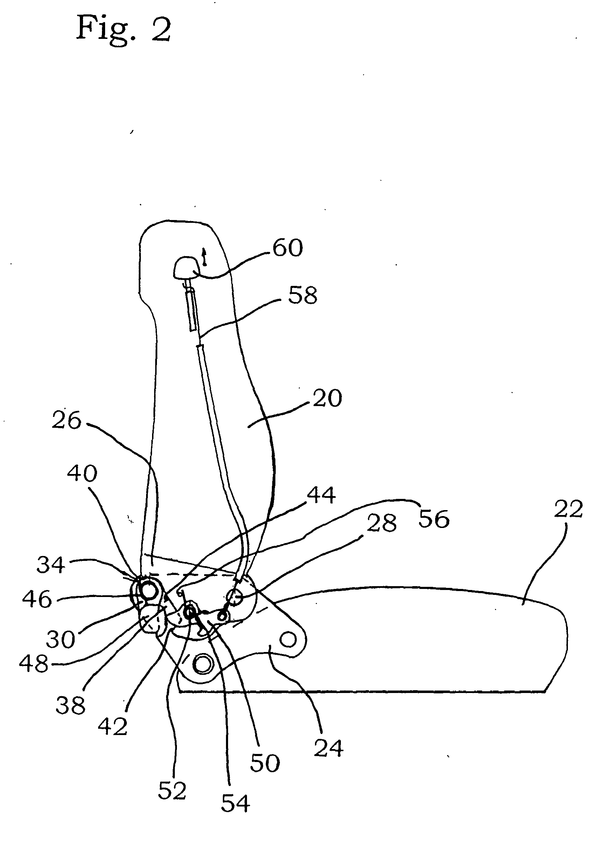

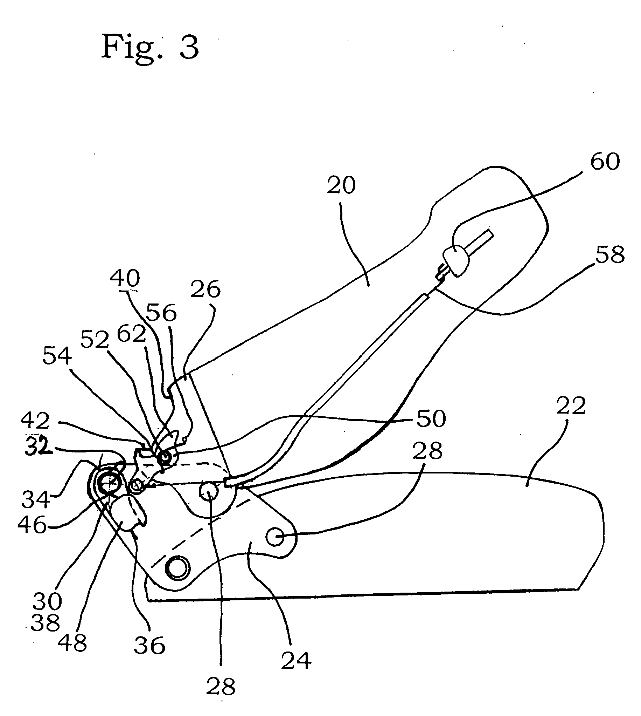

Dem beschriebenen Arm liegt ein Lösearm 62 gegenüber. Er hat eine abgerundete Kontaktfläche, die in der Figur 1 im Abstand vom Sicherheitsstück 48 des Sperrnockens 30 ist. Dieses Sicherheitsstück 48 befindet sich in der selben Ebene wie das Steuerteil 50, nämlich noch oberhalb des zweiten Beschlagteils 26. Wird Zug auf den Bowdenzug 58 ausgeübt, nähert sich der Lösearm 62 gegen die Wirkung der Schwenkfeder 54 dem Sicherheitsstück 48. Bei fortgesetzten Zug wird der Sperrnocken 30 um seine Nockenachse 32 im Uhrzeigersinn nach außen verschwenkt, wie dies Figur 2 zeigt. Die Rükkenlehne 20 kann nun um die Gelenkachse 28 nach vorn gekippt werden in die Stellung, die Figur 3 zeigt. Bei dieser Kippbewegung bleiben Steuerteil 50 und Sperrnocken 30 in Kontakt, so dass der Sperrnocken 30 nicht frei unter der Wirkung seiner Drehfeder 46 gegen den Uhrzeigersinn schwenken kann.

Ein dritter Arm des Steuerteils 50 ist im Wesentlichen hakenförmig ausgeführt und hintergreift in der in Figur 1 gezeigten Sperrstellung den Anschlag 56. Dadurch ist die Sperrstellung mechanisch formschlüssig sichergestellt.

Die Handhabe 60 an der Rückenlehne muss nur so lange betätigt werden, bis ausgehend vom Zustand nach Figur 1 der Zustand nach Figur 2 erreicht ist und weiterhin die Rückenlehne 20 um einen gewissen Winkel nach vorn geschwenkt wurde, ohne aber schon die Stellung nach Figur 3 zu erreichen. Eine kurze Vorkippbewegung genügt, damit bei einem Loslassen der Handhabe 60 der Sperrnocken 30 nicht wieder selbstständig in die Sperrbucht 38 einfallen kann.

Lässt ein Benutzer dagegen die Handhabe 60 im Zustand gemäß Figur 2 los, findet sich der Sperrnocken 30 in seine Sperrbucht 38 ein.

Wird ausgehend vom gekippten Zustand nach Figur 3 die Rückenlehne entgegen dem Uhrzeigersinn wieder zurück gekippt, rutscht der Sperrnocken 30 am Steuerteil 50 und teilweise auch an der freien Schmalfläche des zweiten Beschlagteils 26 entlang, bis der erste Endbereich 34 an die erste Sperrflanke 40 anschlägt. Dadurch ist die Rückbewegung begrenzt. Die Nockenachse 32 befindet sich im gleichen Abstand von der Gelenkachse 28 wie etwa die Mitte der ersten Sperrflanke. Die zweite Sperrflanke 42 hat dagegen einen deutlich kürzeren Abstand von der Gelenkachse 28, gleiches gilt für die Basis 44 und auf der anderen Seite der zweiten Sperrflanke 42 für die sich anschließenden Bereiche des zweiten Beschlagteils 26. Dadurch behindert der Sperrnocken 30 die Kippbewegung der Rückenlehne 20 nicht.

Sobald bei der beschriebenen Rückbewegung der Rückenlehne 20 der erste Endbereich 34 an die erste Sperrflanke 40 angeschlagen ist, kann auch der Sperrnocken 30 weiter in die Sperrbucht 38 einschwenken. Es kommt zu einem Kontakt zwischen dem zweiten Endbereich 36 und der zweiten Sperrflanke 32. Durch die beschriebene Geometrie wird in Weiterführung der Schwenkbewegung jegliches Spiel zwischen den Sperrflanken 40, 42 und den jeweiligen Endbereichen 34, 36 eliminiert. Damit ist in Sperrstellung der Rücklehne 20 eine spielfreie Arretierung erreicht.

## Patentansprüche

1. Gelenkbeschlag, der für einen Kraftfahrzeugsitz mit vorkippbarer Rükkenlehne (20) bestimmt ist und der ein erstes Beschlagteil (24), ein zweites Beschlagteil (26) und ein Schwenkgelenk aufweist, über das diese beiden Beschlagteile um eine Gelenkachse (28) schwenkbar miteinander verbunden sind, **gekennzeichnet durch**
- einen Sperrnocken (30), der am ersten Beschlagteil (24) um eine Nokkenachse (32) schwenkbar angelenkt ist, und der einen ersten, in Nähe der Nockenachse (32) befindlichen Endbereich (34) und einen diesem ersten Endbereich (34) gegenüberliegenden, zweiten Endbereich (36) hat,
- eine Sperrbucht (38), die am zweiten Beschlagteil (26) ausgebildet ist, die eine erste Sperrflanke (40) und eine dieser gegenüberliegende zweite Sperrflanke (42) aufweist, wobei der Abstand dieser Sperrflanken (42) dem Abstand der beiden Endbereiche (34, 36) angepasst ist und diese Sperrflanken (40, 42) so angeordnet sind, dass ein Kreisbogen um die Gelenkachse (28) als Zentrum, der **durch** die Nockenachse (32) verläuft, die erste Sperrflanke (40) schneidet und außerhalb der zweiten Sperrflanke (42) verläuft und **durch**
- eine Betätigungsvorrichtung, die am Sperrnocken (30) im Abstand von der Nockenachse (32) angreift, so dass der Sperrnocken (30) aus einer Sperrstellung in eine Freigabestellung betätigt werden kann,
- wobei in der Sperrstellung der erste Endbereich (34) des Sperrnockens (30) an der ersten Sperrflanke (40) und der zweite Endbereich (36) des Sperrnockens (30) an der zweiten Sperrflanke (42) anliegen.

2. Gelenkbeschlag nach Anspruch 1, **dadurch gekennzeichnet, dass** zwischen Sperrnocken (3) und erstem Beschlagteil (24) eine Drehfeder (46) angeordnet ist, die den Sperrnocken (30) relativ zum ersten Beschlagteil (24) in einer Drehrichtung vorbelastet, die gegensätzlich ist zur Drehrichtung beim Vorklappen der Rückenlehne (20).

3. Gelenkbeschlag nach Anspruch 1, **dadurch gekennzeichnet, dass** die erste Sperrflanke (40) entlang einer Geraden verläuft, die durch die Nockenachse (32) geht.

4. Gelenkbeschlag nach Anspruch 1, **dadurch gekennzeichnet, dass** die Betätigungsvorrichtung ein Steuerteil (50) aufweist, das am zweiten Beschlagteil (26) angelenkt ist, das mit einem Zugmittel, insbesondere Bowdenzug (58), verbunden ist, und das einen Lösearm (62) hat, der bei Betätigung des Zugmittels den Sperrnocken (30) aus der Sperrstellung in eine Freigabestellung drückt.

5. Gelenkbeschlag nach Anspruch 4, **dadurch gekennzeichnet, dass** das Steuerteil (50) weiterhin eine Haltenase aufweist, die in Ruhestellung des Steuerteils (50) hinter eine Blockierflanke des Sperrnockens (30) greift.

6. Gelenkbeschlag nach Anspruch 1, **dadurch gekennzeichnet, dass** der Sperrnocken (30) mindestens ein Sicherheitsstück (48) aufweist, das sich in Sperrstellung des Sperrnockens (30) seitlich neben dem zweiten Beschlagteil (26) befindet.

7. Gelenkbeschlag nach Anspruch 5, **dadurch gekennzeichnet, dass** in Sperrstellung des Sperrnockens (30) sich der Sperrnocken (30) zwischen einem Sicherheitsstück (48) und dem ersten Beschlagteil (24) befindet.

8. Gelenkbeschlag nach Anspruch 1, **dadurch gekennzeichnet, dass** das erste Beschlagteil (24) mit einem Sitzträger (22) verbunden ist und dass das zweite mit einem Rückenlehnenträger (20) verbunden ist.

9. Gelenkbeschlag nach Anspruch 1, **dadurch gekennzeichnet, dass** der Kraftfahrzeugsitz zwei Sitzseiten hat, und dass an jeder Sitzseite jeweils ein Gelenkbeschlag vorgesehen ist, wobei die beiden Gelenkbeschläge durch eine Mitnehmereinrichtung miteinander bewegungsverbunden sind.

10. Gelenkbeschlag nach Anspruch 4, **dadurch gekennzeichnet, dass** dem Steuerteil (50) eine Schwenkfeder (54) zugeordnet ist, die das Steuerteil (50) in eine Position elastisch vorbelastet, in der es sich außerhalb der Sperrbucht (38) befindet.

## Claims

1. A joint fitting intended for use in a vehicle seat with a forward tiltable seat back (20) which is provided with a first fitting part (24), a second fitting part (26) and a pivot joint by way of which said two fitting parts are pivotally joined together, said joint fitting being furthermore provided with:
- a locking cam (30) which is hinged to a first fitting part (24) in such a manner that it is pivotal about a cam axle (32) and which has a first end region (34) located in proximity to the cam axle (32) and a second end region (36) facing said first end region (34),
- a locking bight (38) configured on the second fitting part (26) and provided with a first locking side (40) and with a facing locking side (42), the distance between said locking sides (42) matching the distance between the two end regions, and said locking sides (40, 42) being arranged in such a manner that an arc of a circle having the hinge axle (28) for center and passing through the cam axle (32) intersects the first locking side (40) and passes outside of the second locking side (42) and
- an actuation device acting on the locking cam (30) at a distance from the cam axle (32) so that the locking cam (30) may be passed from a locking position into a release position,
- the first end region (34) of the locking cam (30) abutting on the first locking side (40) and the second end region (36) of the locking cam (30), on the second locking side (42).

2. The joint fitting according to claim 1, wherein a torsion bar (46) is arranged between locking cam (30) and first joint part (24), said torsion bar biasing the locking cam (30) relative to the first fitting part (24) in a direction of rotation counter to the direction of rotation when the seat back (20) is being tipped forward.

3. The joint fitting according to claim 1, wherein the first locking side (40) is oriented along a straight line passing through the cam axle (32).

4. The joint fitting according to claim 1, wherein the actuation device is provided with a control part (50) which is hinged to the second fitting part (26), is connected to a traction means, more specifically to a Bowden cable (58) and has a release arm (62) which presses the locking cam (30) from the locking position into a release position when the traction means is actuated.

5. The joint fitting according to claim 4, wherein the control part (50) is furthermore provided with a retaining lug that engages, in the position of rest of the control part (50), behind a blocking face of the locking cam (30).

6. The joint fitting according to claim 1, wherein the locking cam (30) is provided with at least one safety piece (48) that is located on the side beside the second fitting part (26) when the locking cam (30) is in the locking position.

7. The joint fitting according to claim 5, wherein the locking cam (30) is located between a safety piece (48) and the first fitting part (24) when the locking cam (30) is in the locking position.

8. The joint fitting according to claim 1, wherein the first fitting part (24) is connected to a seat carrier (22) and wherein the second is connected with a carrier of the seat back (20).

9. The joint fitting according to claim 1, wherein the vehicle seat has two seat sides and wherein one joint fitting is provided on each seat side, the two joint fittings being motion-linked together by a driver unit.

10. The joint fitting according to claim 4, wherein a pivot spring (54) is allocated to the control part (50), said pivot spring elastically biasing the control part (50) in a position in which it is located outside of the locking bight (38)

## Revendications

1. Garniture d'articulation qui est destinée à un siège de véhicule automobile ayant un dossier (20) rabattable vers l'avant et qui présente une première pièce de garniture (24), une seconde pièce de garniture (26) ainsi qu'une articulation de pivotement par l'intermédiaire de laquelle ces deux pièces de garniture sont reliées entre elles de manière à pouvoir pivoter autour d'un axe d'articulation (28), **caractérisée par**
- une came d'arrêt (30) qui est articulée sur la première pièce de garniture (24) de manière à pouvoir pivoter autour d'un axe de came (32), et qui présente une première zone terminale (34) située à proximité de l'axe de came (32) ainsi qu'une deuxième zone terminale (36) située en vis-à-vis de cette première zone terminale (34),
- une échancrure d'arrêt (38) qui est réalisée sur ladite seconde pièce de garniture (26), qui présente un premier flanc d'arrêt (40) et un deuxième flanc d'arrêt (42) situé en vis-à-vis de ce premier flanc d'arrêt, la distance entre ces flancs d'arrêt (40, 42) étant adaptée à la distance entre les deux zones terminales (34, 36) et ces flancs d'arrêt (40, 42) étant disposés de telle manière qu'un arc de cercle autour de l'axe d'articulation (28) comme centre, qui s'étend à travers l'axe de came (32), coupe le premier flanc d'arrêt (40) et s'étend à l'extérieur du deuxième flanc d'arrêt (42), et par
- un dispositif de manoeuvre qui se prend sur la came d'arrêt (30) à distance de l'axe de came (32), de sorte que ladite came d'arrêt (30) peut être actionnée de manière à passer d'une position d'arrêt dans une position de libération,
- dans la position d'arrêt, la première zone terminale (34) de la came d'arrêt (30) s'appuyant sur le premier flanc d'arrêt (40) et la deuxième zone terminale (36) de la came d'arrêt (30) s'appuyant sur le deuxième flanc d'arrêt (42).

2. Garniture d'articulation selon la revendication 1, **caractérisée par le fait qu'**un ressort de torsion (46) est disposé entre la came d'arrêt (30) et la première pièce de garniture (24), ledit ressort de torsion précontraignant la came d'arrêt (30) par rapport à la première pièce de garniture (24) dans une direction de rotation qui est opposée à la direction de rotation lorsque le dossier (20) est rabattu vers l'avant.

3. Garniture d'articulation selon la revendication 1, **caractérisée par le fait que** le premier flanc d'arrêt (40) s'étend le long d'une ligne droite qui passe par l'axe de came (32).

4. Garniture d'articulation selon la revendication 1, **caractérisée par le fait que** ledit dispositif de manoeuvre présente une pièce de commande (50) qui est articulée sur la seconde pièce de garniture (26), qui est reliée à un moyen de traction, en particulier un câble Bowden, et qui présente un bras de déblocage (62) lequel, lorsque le moyen de traction est actionné, pousse la came d'arrêt (30) hors de la position d'arrêt dans une position de libération.

5. Garniture d'articulation selon la revendication 4, **caractérisée par le fait que** ladite pièce de commande (50) présente en sus un nez de retenue qui, en position de repos de la pièce de commande (50), se prend derrière un flanc de blocage de la came d'arrêt (30).

6. Garniture d'articulation selon la revendication 1, **caractérisée par le fait que** la came d'arrêt (30) présente au moins une pièce de sécurité (48) qui, lorsque la came d'arrêt (30) se trouve dans la position d'arrêt, est située latéralement à côté de la seconde pièce de garniture (26).

7. Garniture d'articulation selon la revendication 5, **caractérisée par le fait que**, lorsque la came d'arrêt (30) se trouve dans la position d'arrêt, la came d'arrêt (30) est située entre une pièce de sécurité (48) et la première pièce de garniture (24).

8. Garniture d'articulation selon la revendication 1, **caractérisée par le fait que** la première pièce de garniture (24) est reliée à un support de siège (22) et que la seconde pièce de garniture est reliée à un support de dossier (20).

9. Garniture d'articulation selon la revendication 1, **caractérisée par le fait que** le siège de véhicule automobile présente deux côtés de siège, et que respectivement une garniture d'articulation est prévue sur chaque côté du siège, les deux garnitures d'articulation étant reliées entre elles à mouvement par le biais d'un dispositif entraîneur.

10. Garniture d'articulation selon la revendication 4, **caractérisée par le fait qu'**à ladite pièce de commande (50) est associé un ressort de pivotement (54) qui précontraint la pièce de commande (50) de manière élastique dans une position dans laquelle elle est située à l'extérieur de ladite échancrure d'arrêt (38).
